# EUROPEAN PATENT APPLICATION

(11) **EP 4 306 663 A1**
(43) Date of publication of application: **17.01.2024**
(21) Application number: 22771400.3
(22) Date of filing: 14.03.2022
(51) Int. Cl.: C21D 8/12, C21D 9/46, C22C 38/00, C22C 38/06, H01F 1/147, C23C 22/00

(54) **POWDER FOR ANNEALING SEPARATORS AND METHOD FOR PRODUCING GRAIN-ORIENTED ELECTROMAGNETIC STEEL SHEET USING SAME**

(30) Priority: 15.03.2021 JP 2021041862
(71) Applicant: JFE Steel Corporation, Tokyo 100-0011 (JP)
(72) Inventor: TERASHIMA, Takashi, Tokyo 100-0011 (JP); SHIROYANAGI, Karin, Tokyo 100-0011 (JP)
(74) Representative: Haseltine Lake Kempner LLP
(86) International application number: PCT/JP2022/011434
(87) International publication number: WO 2022/196655

(57) **Abstract**

An annealing separator, by being applied to a steel sheet, enables retention of a good shape of a coil after annealing obtained by winding the steel sheet with the annealing separator applied thereto into a coil which is then annealed at a high temperature exceeding 1000 °C. A powder used as the annealing separator: contains magnesium oxide as a main component and B: 0.020 mass% or more and 0.200 mass% or less, SO₃: 0.030 mass% or more and 2.000 mass% or less, and P₂O₃: 0.050 mass% or more and 1.000 mass% or less; and contains 0.2 mass% or more and 5.0 mass% or less of particles having a particle size of more than 45 µm and 75 µm or less. The particles having this particle size contain (boron) B: 0.002 mass% or more and less than 0.020 mass%, SO₃: less than 0.030 mass%, and P₂O₃: less than 0.050 mass%.

## Description

### TECHNICAL FIELD

The present disclosure relates to a powder used for an annealing separator for use in the production of grain-oriented electrical steel sheets, and a powder for an annealing separator excellent in retaining the shape of a coil after final annealing. The present disclosure also relates to a method of producing a grain-oriented electrical steel sheet having excellent coating uniformity and magnetic properties by using such a powder for an annealing separator.

### BACKGROUND

A grain-oriented electrical steel sheet is typically produced by subjecting a steel slab adjusted to a predetermined chemical composition to hot rolling, annealing, and cold rolling, then to recrystallization annealing and decarburization annealing, and then to final annealing. Of these processes, the final annealing process requires heat treatment at a high temperature of 1000 °C or more. Hence, an annealing separator containing a powder of magnesium oxide as a main component is usually applied in order to prevent coil sticking.

Magnesium oxide not only has the foregoing role as a sticking inhibitor, but also has the role of reacting with an oxide layer, which is formed on the steel sheet surface during decarburization annealing performed before final annealing and mainly made of silica, during final annealing to form a forsterite film (coating), and the role of purification by removing, from the steel sheet, precipitates (for example, AlN, MnS, MnSe, Si₃N₄, TiN, TiC, etc.) called inhibitors which control the growth of iron crystal grains, after final annealing.

To advantageously achieve such roles, for example, WO 2013/051270 A1 (PTL 1) proposes a technique whereby trace components such as Cl, B, CaO, and P₂O₃ are added to magnesia (magnesium oxide) in controlled amounts and the particle size distribution of water-insoluble compounds added separately from the trace components is controlled.

In the final annealing process of the grain-oriented electrical steel sheet described above, the steel sheet wound into a coil is laid on its side so that the hole at the center of the coil will be in the vertical (up-down) direction, and annealed at a high temperature of 1000 °C or more. Therefore, in the process of heating and cooling, a large temperature difference tends to occur in the coil, and the coil after annealing is likely to have a shape defect such as deforming into a barrel shape (center buckle) or swelling at the upper and lower ends (both ends in the coil axial direction) (wavy edges).

In addition, if the annealing separator containing magnesium oxide as a main component shrinks as a result of the progress of sintering due to heating during the final annealing, a so-called loose coil results, which can be problematic when handling the coil to the next process.

A means of avoiding such a loose coil is to wind the coil with a high winding tension before the final annealing. However, an excessively high winding tension may cause buckling in the inner diameter part of the coil.

In view of these problems, for example, JP 2012-177148 A (PTL 2) proposes a technique whereby magnesia (magnesium oxide) having a particle size of 25 µm or more and less than 75 µm is contained to prevent buckling before final annealing and the volume shrinkage ratio of the annealing separator caused by baking is controlled to be an appropriate value to solve the loose coil handling problem.

### CITATION LIST

### Patent Literature

PTL 1: WO 2013/051270 A1
PTL 2: JP 2012-177148 A

### SUMMARY

### (Technical Problem)

However, PTL 1 does not mention at all about the problem of coil shape degradation after final annealing and what measure can be taken to solve the problem.

PTL 2 provides a solution to buckling before final annealing and a solution to the loose coil handling problem after final annealing, but does not address the foregoing problem of coil shape degradation (center buckle, wavy edges) after final annealing.

It could therefore be helpful to provide a powder suitable for an annealing separator and contributing to the production of a grain-oriented electrical steel sheet excellent in coating uniformity and magnetic properties by solving the foregoing problem of the coil shape after final annealing.

### (Solution to Problem)

We thus provide:
1. A powder for an annealing separator, the powder comprising: a chemical composition containing (consisting of) magnesium oxide as a main component and containing B: 0.020 mass% or more and 0.200 mass% or less, SO₃: 0.030 mass% or more and 1.000 mass% or less, and P₂O₃: 0.050 mass% or more and 1.000 mass% or less; and 0.2 mass% or more and 5.0 mass% or less of particles having a particle size of more than 45 µm and 75 µm or less, wherein the particles having a particle size of more than 45 µm and 75 µm or less contain B: 0.002 mass% or more and less than 0.020 mass%, sulfur: less than 0.030 mass% in terms of SO₃, and phosphorus: less than 0.050 mass% in terms of P₂O₃.
2. The powder for an annealing separator according to 1., wherein the particles having a particle size of more than 45 µm and 75 µm or less contain sodium (Na): 0.010 mass% or less.
3. The powder for an annealing separator according to 1. or 2., wherein the magnesium oxide has a purity of 95 mass% or more.
4. A production method for a grain-oriented electrical steel sheet, the production method comprising subjecting a steel slab for a grain-oriented electrical steel sheet to hot rolling and cold rolling, thereafter to recrystallization annealing and decarburization annealing, and thereafter applying an annealing separator and then performing final annealing, wherein the powder for an annealing separator according to any one of 1. to 3. is used as the annealing separator.
5. The production method for a grain-oriented electrical steel sheet according to 4., wherein a thickness of the steel sheet is 0.05 mm or more and 0.20 mm or less.

### (Advantageous Effect)

It is thus possible to obtain, at low cost, a powder for an annealing separator that has excellent coating reactivity and can be used in the production of a grain-oriented electrical steel sheet having good coating quality, and enables a good coil shape after final annealing and achieves high production yield rate.

It is also possible to provide a production method for obtaining a grain-oriented electrical steel sheet with good coating quality by using the powder for an annealing separator.

### BRIEF DESCRIPTION OF THE DRAWINGS

In the accompanying drawings:
FIG. 1A is a side view of a coil, schematically illustrating the wavy edge shape of the coil after final annealing;
FIG. 1B is a top view of a coil, schematically illustrating the wavy edge shape of the coil after final annealing;
FIG. 2A is a side view of a coil, schematically illustrating the center buckle shape of the coil after final annealing; and
FIG. 2B is a top view of a coil, schematically illustrating the center buckle shape of the coil after final annealing.

### DETAILED DESCRIPTION

The experiment results that led to the presently disclosed techniques will be described below.

First, samples were produced in the following manner:
As a starting material, High Purity & Ultrafine Single Crystal Magnesia Powder 2000A produced by Ube Material Industries, Ltd. was used. The purity of the magnesia was extremely high with 99.98 mass% MgO.

The starting material was hydrated in pure water to obtain a magnesium hydroxide slurry.

The magnesium hydroxide slurry was then compressed using a filter press to obtain a magnesium hydroxide cake. In the magnesium hydroxide slurry, boric acid (H₃BO₃), magnesium sulfate (MgSO₄), diammonium phosphate ((NH₄)₂HPO₄), etc. were added to adjust the trace component amounts in the magnesium oxide after baking.

The trace component amounts can be adjusted as appropriate not only by adjusting the addition amount to the slurry but also by adjusting the degree of water washing of the magnesium hydroxide cake, the baking temperature, and the like.

400 g of the obtained magnesium hydroxide cake was put in an alumina crucible, and baked in air in an electric furnace (SPX1518T-17 produced by Marusho Denki Co., Ltd.) at a temperature of 700 °C for 60 minutes after the electric furnace recuperated. The resultant baked product was cooled in the furnace, and then ground. After the grinding, the particle size of the obtained powder was adjusted using a sieve to obtain magnesium oxide used in this experiment.

The properties of the obtained magnesium oxide are shown in Table 1. In the table, "particle size (mass%)" represents what mass% of the sieved powder passed through a sieve of the indicated mesh size. 100.0 mass% means that the whole powder passed through the sieve. The same applies to Tables 2, 4, and 5.

### [Table 1]

**Table 1**

| No. | Particle size (mass%) | | | | | | Components (mass%) | | |
|---|---|---|---|---|---|---|---|---|---|
| | 500 mesh (25µm) Pass | 390 mesh (38µm) Pass | 330 mesh (45µm) Pass | 235 mesh (63µm) Pass | 200 mesh (75µm) Pass | 166 mesh (90µm) Pass | B | SO₃ | P₂O₃ |
| 1-1 | 70.0 | 94.0 | 99.5 | 100.0 | 100.0 | 100.0 | 0.005 | 0.010 | 0.030 |
| 1-2 | 70.0 | 94.0 | 99.5 | 100.0 | 100.0 | 100.0 | 0.080 | 0.100 | 0.120 |
| 1-3 | 30.0 | 65.0 | 78.0 | 94.0 | 99.3 | 99.8 | 0.003 | 0.008 | 0.010 |
| 1-4 | 30.0 | 65.0 | 78.0 | 94.0 | 99.3 | 99.8 | 0.080 | 0.100 | 0.120 |
| 1-5 | 12.0 | 14.0 | 18.0 | 39.0 | 63.0 | 98.0 | 0.001 | 0.005 | 0.005 |
| 1-6 | 12.0 | 14.0 | 18.0 | 39.0 | 63.0 | 98.0 | 0.080 | 0.100 | 0.120 |

The magnesium oxides adjusted in particle size as shown in Table 1 were mixed in the blending amounts shown in Table 2. Thus, powders for annealing separators different in particle size distribution and trace component amounts were obtained as shown in Table 2.

### [Table 2]

**Table 2**

| No. | Blending amount (g) | | | | | | Particle size (mass%) | | | | | | Components (mass%) | | |
|---|---|---|---|---|---|---|---|---|---|---|---|---|---|---|---|
| | No. 1-1 | No. 1-2 | No. 1-3 | No. 1-4 | No. 1-5 | No. 1-6 | 500 mesh (25µm) Pass | 390 mesh (38µm) Pass | 330 mesh (45µm) Pass | 235 mesh (63µm) Pass | 200 mesh (75µm) Pass | 166 mesh (90µm) Pass | B | SO₃ | P₂O₃ |
| 2-1 | 100 | 0 | 0 | 0 | 0 | 0 | 70.0 | 94.0 | 99.5 | 100.0 | 100.0 | 100.0 | 0.005 | 0.010 | 0.030 |
| 2-2 | 0 | 100 | 0 | 0 | 0 | 0 | 70.0 | 94.0 | 99.5 | 100.0 | 100.0 | 100.0 | 0.080 | 0.100 | 0.120 |
| 2-3 | 98 | 2 | 0 | 0 | 0 | 0 | 70.0 | 94.0 | 99.5 | 100.0 | 100.0 | 100.0 | 0.007 | 0.012 | 0.032 |
| 2-4 | 0 | 70 | 5 | 0 | 20 | 5 | 53.5 | 72.6 | 78.1 | 84.5 | 90.7 | 99.5 | 0.060 | 0.076 | 0.092 |
| 2-5 | 0 | 0 | 0 | 0 | 100 | 0 | 12.0 | 14.0 | 18.0 | 39.0 | 63.0 | 98.0 | 0.001 | 0.005 | 0.005 |
| 2-6 | 0 | 90 | 0 | 10 | 0 | 0 | 66.0 | 91.1 | 97.4 | 99.4 | 99.9 | 100.0 | 0.080 | 0.100 | 0.120 |
| 2-7 | 0 | 90 | 0 | 0 | 10 | 0 | 64.2 | 86.0 | 91.4 | 93.9 | 96.3 | 99.8 | 0.072 | 0.091 | 0.109 |

Next, a slab for an electrical steel sheet containing C: 0.045 mass%, Si: 3.25 mass%, Mn: 0.070 mass%, Al: 80 mass ppm, N: 40 mass ppm, and S: 20 mass ppm was heated to a temperature of 1200 °C, and then hot rolled to obtain a hot-rolled sheet of 2.0 mm in thickness, which was wound into a coil. The coil of the hot-rolled sheet was subjected to hot-rolled sheet annealing at 1000 °C for 30 seconds, and then scale on the steel sheet surface was removed. Following this, the hot-rolled and annealed sheet was cold rolled to obtain a cold-rolled sheet with a final cold-rolled sheet thickness of 0.23 mm. The cold-rolled sheet was then subjected to decarburization annealing of holding at a soaking temperature of 850 °C for 60 seconds, also serving as recrystallization annealing. The powder for an annealing separator shown in Table 2 was then applied in the form of a slurry to the cold-rolled sheet, and then the cold-rolled sheet was wound into a coil. The coil was heated to 1200 °C at a heating rate of 25 °C/h in a mixed atmosphere of nitrogen: 75 vol% and hydrogen: 25 vol%, subjected to final annealing of holding at 1200 °C for a holding time of 20 hours in an atmosphere of hydrogen: 100 vol%, and then subjected to smoothing annealing to obtain a sample.

The coating appearance uniformity, the coating adhesion property, and the coil shape after final annealing of each obtained sample were investigated.

In this experiment, the coating appearance uniformity was evaluated as uniform in the case where any part different in color tone was less than or equal to 20 % of the total surface area by visual observation, and evaluated as not uniform in the case where any part different in color tone was more than 20 % of the total surface area by visual observation.

For the coating adhesion property, the sample was sheared to 280 mm in the rolling direction and 30 mm in the direction orthogonal to the rolling direction, and then subjected to stress relief annealing in a nitrogen atmosphere at 820 °C for 3 hours. After this, the steel sheet was pressed against each round bar different in inner diameter (by 5 mm), and the minimum diameter (mm) at which coating exfoliation did not occur was measured.

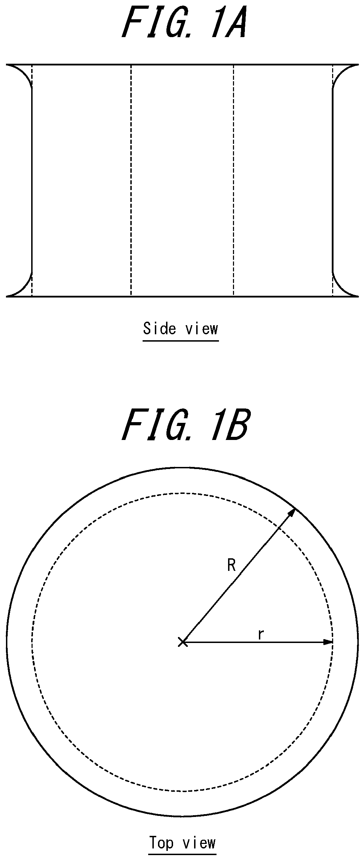

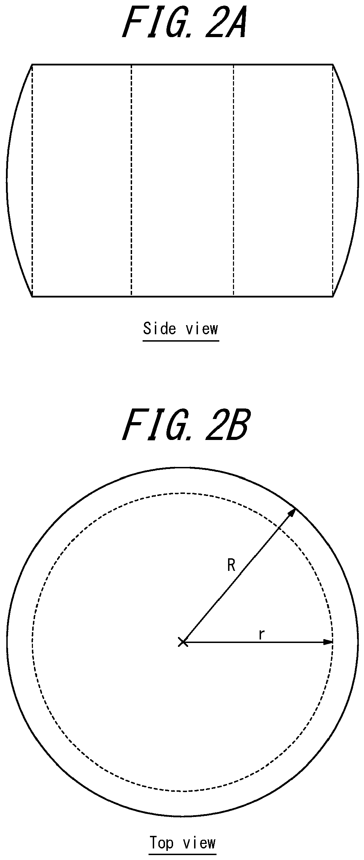

For the coil shape after final annealing (hereafter also simply referred to as "annealing"), after cooling the coil to room temperature, the deformation amount between before and after the annealing was measured according to each coil deformation form with reference to FIGS. 1A and 1B (wavy edge shape) or FIGS. 2A and 2B (center buckle shape). Specifically, as illustrated in FIGS. 1B and 2B, the radius (r) of the inscribed circle of the outer circumference of the coil before the annealing and the radius (R) of the inscribed circle of the outer circumference of the coil after the annealing were measured, and the deformation amount (R - r) was calculated. The coil shape was evaluated as good in the case where the calculated amount was 20 mm or less.

FIGS. 1A and 1B schematically illustrate the wavy edge shape of a coil after annealing. FIG. 1A is a side view of the coil, and FIG. 1B is a top view of the coil. FIGS. 2A and 2B schematically illustrate the center buckle shape of a coil after annealing. FIG. 2A is a side view of the coil, and FIG. 2B is a top view of the coil. In each of these drawings, the dotted lines represent the shape before annealing, and the solid lines represent the shape after annealing. The hollow part of the coil does not deform significantly between before and after annealing. Accordingly, in FIGS. 1A and 2A, the contour of the hollow part hidden from the side is indicated only by dotted lines. In FIGS. 1B and 2B, the contour of the hollow part is omitted for the sake of explaining the deformation amount (R - r).

Table 3 shows each powder No. for an annealing separator used in the experiment and its trace components (copied from Table 2), the properties (mass ratio and trace components) of particles having a particle size in the range of more than 45 µm and 75 µm or less (hereafter simply referred to as "particles of more than 45 µm and 75 µm or less"), the coil shape after annealing, the coating appearance uniformity, and the coating adhesion property. The term "mass ratio" above and in the table denotes the mass ratio of the particles of more than 45 µm and 75 µm or less with respect to the entire powder for an annealing separator.

As shown in Table 3, if the amounts of the trace components B, SO₃, and P₂O₃ in the entire powder for an annealing separator were outside the range according to the present disclosure (Nos. 3-1, 3-3, 3-5), the coating appearance was not uniform or the coating adhesion property degraded even when the mass ratio and the amounts of the trace components of the particles of more than 45 µm and 75 µm or less were within the range according to the present disclosure. If the mass ratio of the particles of more than 45 µm and 75 µm or less was excessively high (No. 3-5), the coating appearance was rough (i.e. surface roughness). If the amounts of the trace components B, SO₃, and P₂O₃ contained in the particles of more than 45 µm and 75 µm or less were outside the range according to the present disclosure (Nos. 3-2, 3-6), the coil shape after annealing was poor even when the chemical composition of the entire powder for an annealing separator and the mass ratio of the particles of more than 45 µm and 75 µm or less were within the range according to the present disclosure.

### [Table 3]

**Table 3**

| No. | Powder for annealing separator | Components (mass%) | | | Particles of more than 45µm and 75µm or less /components (mass%) | | | | Shape after annealing (mm) | Adhesion property (mm) | Coating appearance |
|---|---|---|---|---|---|---|---|---|---|---|---|
| | | B | SO₃ | P₂O₃ | Mass ratio | B | SO₃ | P₂O₃ | R-r | | |
| 3-1 | 2-1 | 0.005 | 0.010 | 0.030 | 0.5 | 0.005 | 0.010 | 0.030 | 10 | 50 | Not uniform |
| 3-2 | 2-2 | 0.080 | 0.100 | 0.120 | 0.5 | 0.080 | 0.100 | 0.120 | 50 | 20 | Uniform |
| 3-3 | 2-3 | 0.007 | 0.012 | 0.032 | 0.5 | 0.007 | 0.012 | 0.032 | 10 | 50 | Not uniform |
| 3-4 | 2-4 | 0.060 | 0.076 | 0.092 | 12.7 | 0.017 | 0.025 | 0.029 | 5 | 25 | Rough surface |
| 3-5 | 2-5 | 0.001 | 0.005 | 0.005 | 45.0 | 0.001 | 0.005 | 0.005 | 5 | 60 | Rough surface |
| 3-6 | 2-6 | 0.080 | 0.100 | 0.120 | 2.6 | 0.080 | 0.100 | 0.120 | 35 | 20 | Uniform |
| 3-7 | 2-7 | 0.072 | 0.091 | 0.109 | 5.0 | 0.008 | 0.014 | 0.015 | 5 | 20 | Uniform |

The reasons for limiting each constituent element in the present disclosure will be described below.

### [Powder for annealing separator]

A powder for an annealing separator according to the present disclosure has magnesium oxide as its main component (i.e. is mainly composed of magnesium oxide). Herein, the "main component" means a content of 50 mass% or more. If the content of magnesium oxide is less than 50 mass%, the amount of a forsterite film (coating) formed by a reaction between internal silica oxide formed during decarburization annealing and magnesium oxide in the annealing separator is insufficient. The proportion of magnesium oxide is preferably 60 mass% or more, and more preferably 80 mass% or more.

In the present disclosure, the contents of B, SO₃, and P₂O₃ in the powder for an annealing separator are respectively B: 0.020 mass% or more and 0.200 mass% or less, SO₃: 0.030 mass% or more and 1.000 mass% or less, and P₂O₃: 0.050 mass% or more and 1.000 mass% or less, in order to improve the coating appearance uniformity and the coating adhesion property.

If the B content is less than 0.020 mass%, the coating formation is insufficient and the coating thickness is excessively thin. If the B content is more than 0.200 mass%, B enters into the steel sheet and causes embrittlement. The lower limit of the B content in the powder for an annealing separator is preferably 0.025 mass% or more. The upper limit of the B content is preferably 0.180 mass% or less.

The B content can be measured by dissolving the powder to be measured in acid and performing ICP optical emission spectrometry.

A SO₃ content of less than 0.030 mass% is not desirable because the coating formation is insufficient. If the SO₃ content is more than 1.000 mass%, the coating formation is excessive, which causes scattering of excessively formed coating portions and results in poor coating appearance. The lower limit of the SO₃ content in the powder for an annealing separator is preferably 0.034 mass% or more. The upper limit of the SO₃ content is preferably 0.700 mass% or less.

The SO₃ content can be measured by dissolving the powder to be measured in acid, performing ICP optical emission spectrometry to measure the S content, and converting it into the SO₃ content.

If the P₂O₃ content is less than 0.050 mass%, the coating formation reaction shifts to the high temperature side and consequently the coating adhesion property degrades. If the P₂O₃ content is more than 1.000 mass%, the coating formation reaction shifts to the low temperature side and secondary recrystallization is affected, which leads to poor magnetism. The lower limit of the P₂O₃ content in the powder for an annealing separator is preferably 0.060 mass% or more. The upper limit of the P₂O₃ content is preferably 0.800 mass% or less.

The P₂O₃ content can be measured by dissolving the powder to be measured in acid, performing ICP optical emission spectrometry to measure the P content, and converting it into the P₂O₃ content.

In order to maintain a good coil shape after annealing, the powder used as the annealing separator needs to contain 0.2 mass% or more and 5.0 mass% or less of particles having a particle size of more than 45 µm and 75 µm or less. The lower limit of the proportion of the particles in the powder is preferably 0.5 mass% or more. The upper limit of the proportion of the particles in the powder is preferably 3.0 mass% or less.

In a state in which the annealing separator is applied to the steel sheet and the steel sheet is wound into a coil, the distance between the layers of the coiled steel sheet is about 30 µm to 40 µm. Particles having a particle size of more than 45 µm are required to support such space between the layers of the steel sheet. If the particle size is more than 75 µm, on the other hand, the particles bite into the steel sheet surface after annealing and cause surface indentation flaws. The proportion of the particles having a particle size of more than 75 µm in the powder for an annealing separator is therefore preferably 2.00 mass% or less.

If the proportion of the particles having a particle size of more than 45 µm and 75 µm or less is less than 0.2 mass%, the coil shape cannot be maintained sufficiently. If the proportion of the particles having a particle size of more than 45 µm and 75 µm or less is more than 5.0 mass%, the roughness of the coating surface increases, which is undesirable.

The particles of more than 45 µm and 75 µm or less are preferably magnesium oxide. This is because, while a sintering additive or the like can change greatly in particle size as a result of reacting with an annealing separator or the like, magnesium oxide changes little in particle size due to annealing.

In the present disclosure, in the particles of more than 45 µm and 75 µm or less, the boron (B) content needs to be 0.002 mass% or more and less than 0.020 mass%, the sulfur content needs to be less than 0.030 mass% in terms of SO₃, and the phosphorus content needs to be less than 0.050 mass% in terms of P₂O₃.

If the boron content is less than 0.002 mass%, the coating formation ability is excessively low. This causes scattering of excessively thin coating portions. If the boron content is 0.020 mass% or more, the particles self-sinter during annealing and shrink, making it impossible to maintain the coil shape. If the SO₃ content is 0.030 mass% or more and/or the P₂O₃ content is 0.050 mass% or more, too, the particles self-sinter and shrink, making it impossible to maintain the coil shape favorably.

No lower limit is placed on the sulfur content and the phosphorus content, but industrially it is preferable that the sulfur content is 0.0001 mass% or more in terms of SO₃ and the phosphorus content is 0.0005 mass% or more in terms of P₂O₃.

The boron content, the SO₃ (or sulfur) content, and the P₂O₃ (or phosphorus) content can be measured by dissolving the powder of the particles to be measured in acid and performing ICP optical emission spectrometry respectively for the elements B, S, and P, as with the components in the powder for an annealing separator.

When analyzing the powder for an annealing separator in a mixture state, the particles of more than 45 µm and 75 µm or less are extracted by wet sieving and analyzed. For sieving, a JIS sieve having a diameter of 200 mm and a height of 45 mm described in JIS Z 8801 is preferably used.

In the present disclosure, "particles of more than 45 µm and 75 µm or less" refer to particles that pass through a 200-mesh sieve described in JIS Z 8801 and do not pass through a 330-mesh sieve.

The sieving is performed using automatic wet sieve Viblette^{®} (Viblette is a registered trademark in Japan, other countries, or both) produced by Hosokawa Micron Corporation under the conditions of 100 g of sieving powder, 5 L/min of water spray, 200 rpm of water sprinkler rotation speed, 10 minutes of operating time, and 60 Hz of power frequency.

### <Production method for powder for annealing separator>

The production method for the powder for an annealing separator according to the present disclosure is not limited, but magnesium oxide obtained by sintering raw material is typically used as a main component. Examples of the raw material include magnesium hydroxide, magnesium carbonate, and magnesium chloride.

The amount of each of the foregoing components B, SO₃, and P₂O₃ can be adjusted by adding borate, sulfate, and phosphate to the raw material before baking such as magnesium oxide. Here, in the case where Na salt is used, sodium remains in magnesium oxide. Since sodium may promote self-sintering of particles during annealing as with B, SO₃, and P₂O₃, the sodium (Na) content in the particles of more than 45 µm and 75 µm or less is preferably less than 0.010 mass%. The sodium (Na) content may be 0 mass%. The Na content can be measured by dissolving the particles to be measured in acid and performing ICP optical emission spectrometry.

The magnesium oxide used in the present disclosure may contain B, SO₃, P₂O₃, and Na besides MgO, and may contain Cl, CaO, SiO₂, Fe₂O₃, Al₂O₃, and inevitable impurities in addition to these components.

The purity of magnesium oxide (MgO content in magnesium oxide) is preferably 95 mass% or more, and more preferably 98 mass% or more.

Therefore, the content of the components other than MgO in the magnesium oxide is preferably 5 mass% or less, and more preferably 2 mass% or less.

The contents of boron (B), sulfur, and phosphorus contained in the particles of more than 45 µm and 75 µm or less also include B, SO₃, and P₂O₃ in the magnesium oxide.

The powder for an annealing separator may contain, in addition to magnesium oxide, reaction aids such as titanium oxide and strontium hydroxide. Moreover, the powder for an annealing separator may be mixed with another powder for an annealing separator and applied to the coil as an annealing separator.

### [Production method for grain-oriented electrical steel sheet]

A steel sheet to which the presently disclosed techniques are applied is not limited to any particular steel type as long as it is a grain-oriented electrical steel sheet having a coating mainly composed of forsterite on the surface. Such a grain-oriented electrical steel sheet is typically produced in the following manner: A silicon-containing steel slab is, by a known method, subjected to hot rolling, then to cold rolling once or a plurality of times with intermediate annealing therebetween to obtain a final thickness, and then to primary recrystallization annealing and decarburization annealing. After this, an annealing separator is applied to the steel sheet, and then the steel sheet is subjected to final annealing.

In the present disclosure, as the powder for an annealing separator, the foregoing powder is used that contains magnesium oxide as a main component, contains B: 0.020 mass% or more and 0.200 mass% or less, SO₃: 0.030 mass% or more and 2.000 mass% or less, and P₂O₃: 0.050 mass% or more and 1.000 mass% or less, and further contains 0.2 mass% or more and 5.0 mass% or less of particles of more than 45 µm and 75 µm or less, wherein the particles of more than 45 µm and 75 µm or less contain boron (B): 0.002 mass% or more and less than 0.020 mass%, sulfur: less than 0.030 mass% in terms of SO₃, and phosphorus: less than 0.050 mass% in terms of P₂O₃.

Optionally, the sodium (Na) content in the particles of more than 45 µm and 75 µm or less may be 0.010 mass% or less, and the purity of MgO in the magnesium oxide powder may be 95 mass% or more.

If the thickness of the steel sheet is thin, iron loss is improved (reduced), which is desirable. If the thickness of the steel sheet is thin, however, the coil shape after annealing tends to degrade. In such a case, it is preferable to use the annealing separator according to the present disclosure. In particular, the annealing separator according to the present disclosure is suitably used for a thin steel sheet with a thickness of 0.20 mm or less, as compared with known annealing separators. The lower limit of the thickness is about 0.05 mm.

### EXAMPLES

Basic magnesium carbonate (MgCO₃)₄Mg(OH)₂·xH₂O produced by FUJIFILM Wako Pure Chemical Corporation was used as a starting material. The starting material was made into a slurry with pure water, and then boric acid (H₃BO₃), magnesium sulfate (MgSO₄), and disodium hydrogenphosphate (Na₂HPO₄·12H₂O) were added into the slurry and the amounts of trace components in magnesium oxide after baking were adjusted. The adjustment was made as appropriate by the addition amounts to the slurry, the baking temperature, and the degree of water washing of a cake. The slurry was compressed using a filter press to obtain a cake. Following this, the cake was put in an alumina crucible, and baked in air in a box furnace at the temperature shown in Table 4 for 20 minutes. The baked cake was ground, and then the particle size was adjusted using a sieve to obtain raw materials 4-1 to 4-10 of powders for annealing separators.

Magnesium chloride hexahydrate produced by Nacalai Tesque, Inc. was dissolved in pure water kept at 25 °C to prepare a saturated aqueous solution. The saturated aqueous solution was then reacted with sodium hydroxide to form magnesium hydroxide. The magnesium hydroxide thus obtained was filtered and washed with water. Here, the amount of sodium (Na) remaining in the magnesium hydroxide was adjusted by changing the water washing time. The magnesium hydroxide was then charged into pure water again to obtain a magnesium hydroxide slurry. Boric acid (H₃BO₃), magnesium sulfate (MgSO₄), and diammonium phosphate ((NH₄)₂HPO₄) were added into the slurry and the amounts of trace components in magnesium oxide after baking were adjusted. The adjustment was made as appropriate by the addition amounts to the slurry, the baking temperature, and the degree of water washing of a magnesium hydroxide cake. The slurry was compressed using a filter press to obtain a cake. Following this, the cake was put in an alumina crucible, and baked in air in a box furnace at the temperature shown in Table 4 for 20 minutes. The baked cake was ground, and then the particle size was adjusted using a sieve to obtain raw materials 4-11 to 4-16 of powders for annealing separators.

### [Table 4]

**Table 4**

| No. | Temperature (°C) | Particle size (mass%) | | | | | | Components (mass%) | | | |
|---|---|---|---|---|---|---|---|---|---|---|---|
| | | 500 mesh (25µm) Pass | 390 mesh (38µm) Pass | 330 mesh (45µm) Pass | 235 mesh (63µm) Pass | 200 mesh (75µm) Pass | 166 mesh (90µm) Pass | B | SO₃ | P₂O₃ | Na |
| 4-1 | 625 | 94.0 | 99.5 | 100.0 | 100.0 | 100.0 | 100.0 | 0.224 | 0.100 | 0.120 | 0.022 |
| 4-2 | 625 | 30.0 | 65.0 | 78.0 | 94.0 | 99.3 | 99.8 | 0.019 | 0.028 | 0.040 | 0.010 |
| 4-3 | 625 | 12.0 | 14.0 | 18.0 | 39.0 | 63.0 | 98.0 | 0.002 | 0.002 | 0.010 | 0.012 |
| 4-4 | 780 | 94.0 | 99.5 | 100.0 | 100.0 | 100.0 | 100.0 | 0.002 | 0.030 | 0.140 | 0.018 |
| 4-5 | 780 | 30.0 | 65.0 | 78.0 | 94.0 | 99.3 | 99.8 | 0.018 | 0.005 | 0.005 | 0.028 |
| 4-6 | 1000 | 94.0 | 99.5 | 100.0 | 100.0 | 100.0 | 100.0 | 0.080 | 3.230 | 0.019 | 0.012 |
| 4-7 | 1000 | 30.0 | 65.0 | 78.0 | 94.0 | 99.3 | 99.8 | 0.015 | 0.005 | 0.001 | 0.008 |
| 4-8 | 1150 | 94.0 | 99.5 | 100.0 | 100.0 | 100.0 | 100.0 | 0.050 | 0.100 | 0.100 | 0.006 |
| 4-9 | 1150 | 15.0 | 20.0 | 28.0 | 58.0 | 89.0 | 99.0 | 0.005 | 0.020 | 0.003 | 0.006 |
| 4-10 | 1150 | 30.0 | 65.0 | 78.0 | 94.0 | 99.3 | 99.8 | 0.008 | 0.020 | 0.060 | 0.002 |
| 4-11 | 650 | 94.0 | 99.5 | 100.0 | 100.0 | 100.0 | 100.0 | 0.040 | 0.090 | 1.220 | 0.013 |
| 4-12 | 890 | 70.0 | 94.0 | 99.5 | 100.0 | 100.0 | 100.0 | 0.003 | 0.018 | 0.045 | 0.003 |
| 4-13 | 890 | 94.0 | 99.5 | 100.0 | 100.0 | 100.0 | 100.0 | 0.080 | 0.020 | 0.040 | 0.002 |
| 4-14 | 1100 | 94.0 | 99.5 | 100.0 | 100.0 | 100.0 | 100.0 | 0.080 | 0.080 | 0.120 | 0.010 |
| 4-15 | 1100 | 15.0 | 20.0 | 28.0 | 58.0 | 89.0 | 99.0 | 0.021 | 0.001 | 0.005 | 0.022 |
| 4-16 | 1100 | 30.0 | 65.0 | 78.0 | 94.0 | 99.3 | 99.8 | 0.015 | 0.040 | 0.005 | 0.009 |

The raw materials 4-1 to 4-16 of powders for annealing separators thus adjusted were mixed as shown in Table 5 to obtain powders 5-1 to 5-28 for annealing separators varying in particle size distribution and components.

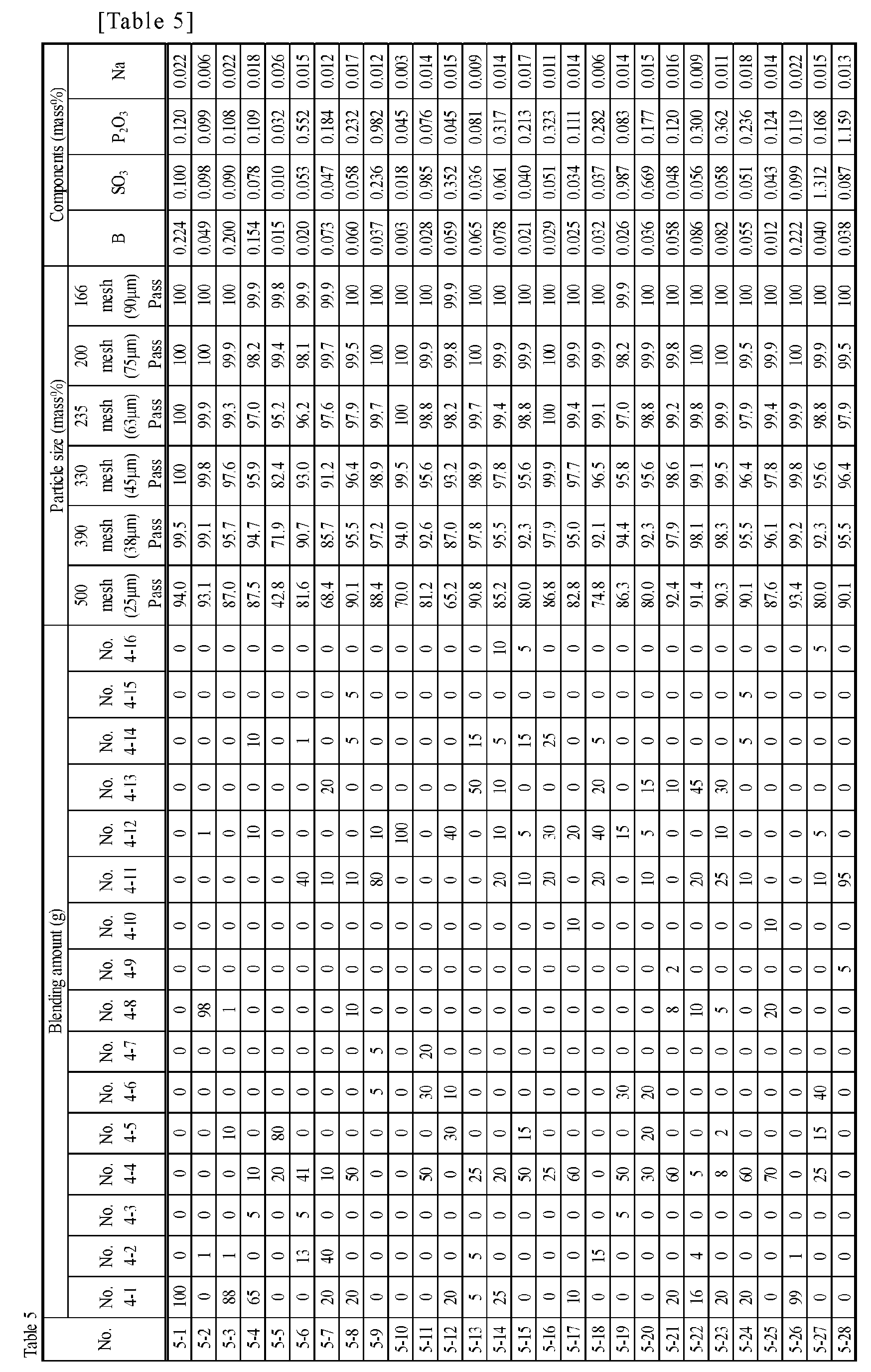

Next, a steel slab containing C: 0.06 mass%, Si: 2.95 mass%, Mn: 0.07 mass%, S: 0.015 mass%, Sb: 0.015 mass%, and Cr: 0.03 mass% with the balance consisting of Fe and inevitable impurities was heated at 1350 °C for 40 minutes, and then hot rolled to a thickness of 2.6 mm. After this, the hot-rolled sheet was subjected to hot-rolled sheet annealing at 900 °C for 60 seconds, and then cold rolled with intermediate annealing of 1050 °C and 60 seconds being interposed therebetween to obtain a final thickness of 0.20 mm. The steel sheet was then subjected to decarburization annealing also serving as recrystallization annealing. After this, the powder (5-1 to 5-28) shown in Table 5 was applied to the steel sheet as an annealing separator. The steel sheet was then heated to 1200 °C at a heating rate of 25 °C/h in a mixed atmosphere of 75 vol% of nitrogen and 25 vol% of hydrogen, subjected to final annealing of holding at 1200 °C for 20 hours in an atmosphere of 100 vol% of hydrogen, and further subjected to smoothing annealing.

For each sample thus obtained, the magnetic flux density, repeated bending property, coating appearance uniformity, coating adhesion property, coil shape after final annealing, and coil cutting ratio were investigated.

The magnetic flux density and repeated bending property were measured using the method in JIS C 2550 (2000). Herein, the magnetic flux density represents the magnetic flux density when excited at 800 A/m.

Regarding the repeated bending property, all samples had good results with 10 times or more except for the powder 5-1 for an annealing separator, which was twice, and the powder 5-26 for an annealing separator, which was once, as shown in Table 6.

The coating appearance uniformity was evaluated as uniform in the case where any part different in color tone was less than or equal to 20 % of the total surface area by visual observation, and evaluated as not uniform in the case where any part different in color tone was more than 20 % of the total surface area by visual observation. For the coating adhesion property, the sample was sheared to 280 mm in the rolling direction and 30 mm in the direction orthogonal to the rolling direction, and then subjected to stress relief annealing in a nitrogen atmosphere at 820 °C for 3 hours. After this, the steel sheet was pressed against each round bar different in inner diameter (by 5 mm), and the minimum diameter (mm) at which exfoliation did not occur was measured. The coating adhesion property was evaluated as good in the case where the measured minimum diameter was 40 mm or less.

For the coil shape after annealing, after cooling the coil to room temperature, the radius (r) (mm) of the inscribed circle of the outer circumference of the coil before the annealing and the radius (R) (mm) of the inscribed circle of the outer circumference of the coil after the annealing were measured in the top view illustrated in FIG. 1B and FIG. 2B, and the value of (R - r) (mm) was calculated. The coil shape was evaluated as good in the case where the value of (R - r) (mm) was 20 mm or less.

Table 6 shows each powder for an annealing separator used in the experiment and its trace component amounts, the components (mass ratio and trace component amounts) of particles of more than 45 µm and 75 µm or less, the coil shape after annealing, the coil cutting ratio, the coating appearance uniformity, the coating adhesion property, the magnetic flux density, and the number of bends.

### [Table 6]

**Table 6**

| No. | Powder for annealing separator | Components (mass%) | | | | Particles of more than 45µm and 75µm or less /components (mass%) | | | | | Shape after annealing (mm) | Coil cutting ratio mass% | Coating adhesion property (mm) | Coating appearance | Magnetic flux density (T) | Number of bends (times) | Remarks |
|---|---|---|---|---|---|---|---|---|---|---|---|---|---|---|---|---|---|
| | | B | SO₃ | P₂O₃ | Na | Mass ratio | B | SO₃ | P₂O₃ | Na | R-r | | | | | | |
| 1 | 5-1 | 0.224 | 0.100 | 0.120 | 0.022 | 0.0 | 0 | 0 | 0 | 0 | 70 | 35 | 40 | Uniform | 1.923 | 2 | Comparative Example |
| 2 | 5-2 | 0.049 | 0.098 | 0.099 | 0.006 | 0.2 | 0.019 | 0.028 | 0.040 | 0.010 | 20 | 1.0 | 20 | Uniform | 1.928 | 12 | Example |
| 3 | 5-3 | 0.200 | 0.090 | 0.108 | 0.022 | 2.3 | 0.018 | 0.007 | 0.008 | 0.026 | 5 | 0.2 | 20 | Uniform | 1.930 | 13 | Example |
| 4 | 5-4 | 0.154 | 0.078 | 0.109 | 0.018 | 2.3 | 0.002 | 0.002 | 0.011 | 0.012 | 5 | 0.2 | 20 | Uniform | 1.926 | 12 | Example |
| 5 | 5-5 | 0.015 | 0.010 | 0.032 | 0.026 | 17.0 | 0.018 | 0.005 | 0.005 | 0.028 | 5 | 0.2 | 50 | Very rough surface | 1.927 | 12 | Comparative Example |
| 6 | 5-6 | 0.020 | 0.053 | 0.552 | 0.015 | 5.0 | 0.012 | 0.016 | 0.027 | 0.011 | 0 | 0.1 | 25 | Uniform | 1.921 | 11 | Example |
| 7 | 5-7 | 0.073 | 0.047 | 0.184 | 0.012 | 8.5 | 0.019 | 0.028 | 0.040 | 0.010 | 0 | 0.1 | 30 | Rough surface | 1.922 | 13 | Comparative Example |
| 8 | 5-8 | 0.060 | 0.058 | 0.232 | 0.017 | 3.1 | 0.021 | 0.001 | 0.005 | 0.022 | 65 | 25 | 30 | Uniform | 1.930 | 14 | Comparative Example |
| 9 | 5-9 | 0.037 | 0.236 | 0.982 | 0.012 | 1.1 | 0.014 | 0.006 | 0.003 | 0.008 | 5 | 0.2 | 25 | Uniform | 1.926 | 14 | Example |
| 10 | 5-10 | 0.003 | 0.018 | 0.045 | 0.003 | 0.5 | 0.003 | 0.018 | 0.045 | 0.003 | 0 | 0.1 | 60 | Not uniform | 1.920 | 11 | Comparative Example |
| 11 | 5-11 | 0.028 | 0.985 | 0.076 | 0.014 | 4.3 | 0.015 | 0.005 | 0.001 | 0.008 | 5 | 0.2 | 40 | Uniform | 1.921 | 12 | Example |
| 12 | 5-12 | 0.059 | 0.352 | 0.045 | 0.015 | 6.6 | 0.018 | 0.005 | 0.006 | 0.027 | 10 | 0.4 | 40 | Rough surface | 1.928 | 12 | Comparative Example |
| 13 | 5-13 | 0.065 | 0.036 | 0.081 | 0.009 | 1.1 | 0.019 | 0.028 | 0.040 | 0.010 | 5 | 0.2 | 40 | Uniform | 1.920 | 14 | Example |
| 14 | 5-14 | 0.078 | 0.061 | 0.317 | 0.014 | 2.2 | 0.015 | 0.039 | 0.006 | 0.009 | 50 | 9.0 | 25 | Uniform | 1.925 | 15 | Comparative Example |
| 15 | 5-15 | 0.021 | 0.040 | 0.213 | 0.017 | 4.3 | 0.017 | 0.014 | 0.005 | 0.023 | 5 | 0.2 | 40 | Uniform | 1.921 | 11 | Example |
| 16 | 5-16 | 0.029 | 0.051 | 0.323 | 0.011 | 0.2 | 0.003 | 0.018 | 0.045 | 0.003 | 15 | 0.7 | 25 | Uniform | 1.928 | 11 | Example |
| 17 | 5-17 | 0.025 | 0.034 | 0.111 | 0.014 | 2.2 | 0.008 | 0.020 | 0.059 | 0.002 | 50 | 9.0 | 30 | Uniform | 1.923 | 11 | Comparative Example |
| 18 | 5-18 | 0.032 | 0.037 | 0.282 | 0.006 | 3.4 | 0.018 | 0.027 | 0.040 | 0.010 | 0 | 0.1 | 40 | Uniform | 1.930 | 12 | Example |
| 19 | 5-19 | 0.026 | 0.987 | 0.083 | 0.014 | 2.3 | 0.002 | 0.003 | 0.011 | 0.012 | 5 | 0.2 | 30 | Uniform | 1.927 | 10 | Example |
| 20 | 5-20 | 0.036 | 0.669 | 0.177 | 0.015 | 4.3 | 0.018 | 0.005 | 0.005 | 0.028 | 5 | 0.2 | 35 | Uniform | 1.921 | 14 | Example |
| 21 | 5-21 | 0.058 | 0.048 | 0.120 | 0.016 | 1.2 | 0.005 | 0.020 | 0.003 | 0.006 | 5 | 0.2 | 40 | Uniform | 1.927 | 10 | Example |
| 22 | 5-22 | 0.086 | 0.056 | 0.300 | 0.009 | 0.9 | 0.019 | 0.028 | 0.040 | 0.010 | 5 | 0.2 | 30 | Uniform | 1.923 | 14 | Example |
| 23 | 5-23 | 0.082 | 0.058 | 0.362 | 0.011 | 0.5 | 0.016 | 0.006 | 0.009 | 0.025 | 10 | 0.4 | 35 | Uniform | 1.924 | 12 | Example |
| 24 | 5-24 | 0.055 | 0.051 | 0.236 | 0.018 | 3.1 | 0.021 | 0.001 | 0.005 | 0.022 | 60 | 17 | 30 | Uniform | 1.921 | 12 | Comparative Example |
| 25 | 5-25 | 0.012 | 0.043 | 0.124 | 0.014 | 2.1 | 0.008 | 0.020 | 0.060 | 0.002 | 50 | 9.0 | 60 | Not uniform | 1.925 | 12 | Comparative Example |
| 26 | 5-26 | 0.222 | 0.099 | 0.119 | 0.022 | 0.2 | 0.019 | 0.028 | 0.040 | 0.010 | 20 | 1.0 | 35 | Uniform | 1.922 | 1 | Comparative Example |
| 27 | 5-27 | 0.040 | 1.312 | 0.168 | 0.015 | 4.3 | 0.017 | 0.014 | 0.005 | 0.023 | 5 | 0.2 | 30 | Not uniform | 1.925 | 11 | Comparative Example |
| 28 | 5-28 | 0.038 | 0.087 | 1.159 | 0.013 | 3.1 | 0.005 | 0.020 | 0.003 | 0.006 | 0 | 0.1 | 30 | Uniform | 1.865 | 14 | Comparative Example |

As shown in Table 6, in the case where the trace component amounts in the powder for an annealing separator were outside the range according to the present disclosure, the magnetic flux density degraded, the coating appearance was not uniform, or the coating adhesion property degraded. In the case where the mass ratio of the powder of more than 45 µm and 75 µm or less was high, surface roughness occurred. In the case where the trace component amounts in the powder of more than 45 µm and 75 µm or less were outside the range according to the present disclosure or the mass ratio of the powder was excessively low, the coil shape after annealing was poor. This caused a coil cutting ratio (i.e. ratio of scrap due to shape defects) of more than 1.0 mass%, leading to an increase in production costs.

In the case where the Na content in the powder of more than 45 µm and 75 µm or less was 0.010 mass% or less, the shape after annealing was further improved.

## Claims

1. A powder for an annealing separator, the powder comprising:
a chemical composition containing magnesium oxide as a main component and containing B: 0.020 mass% or more and 0.200 mass% or less, SO₃: 0.030 mass% or more and 1.000 mass% or less, and P₂O₃: 0.050 mass% or more and 1.000 mass% or less; and
0.2 mass% or more and 5.0 mass% or less of particles having a particle size of more than 45 µm and 75 µm or less,
wherein the particles having a particle size of more than 45 µm and 75 µm or less contain B: 0.002 mass% or more and less than 0.020 mass%, SO₃: less than 0.030 mass%, and P₂O₃: less than 0.050 mass%.

2. The powder for an annealing separator according to claim 1, wherein the particles having a particle size of more than 45 µm and 75 µm or less contain sodium (Na): 0.010 mass% or less.

3. The powder for an annealing separator according to claim 1 or 2, wherein the magnesium oxide has a purity of 95 mass% or more.

4. A production method for a grain-oriented electrical steel sheet, the production method comprising
subjecting a steel slab for a grain-oriented electrical steel sheet to hot rolling and cold rolling, thereafter to recrystallization annealing and decarburization annealing, and thereafter applying an annealing separator and then performing final annealing,
wherein the powder for an annealing separator according to any one of claims 1 to 3 is used as the annealing separator.

5. The production method for a grain-oriented electrical steel sheet according to claim 4, wherein a thickness of the steel sheet is 0.05 mm or more and 0.20 mm or less.
